(19) Europäisches Patentamt
European Patent Office
Office européen des brevets

(11) **EP 4 206 005 B1**

(12) **EUROPEAN PATENT SPECIFICATION**

(45) Date of publication and mention
of the grant of the patent:
**27.08.2025   Bulletin 2025/35**

(21) Application number: **20954461.8**

(22) Date of filing: **23.09.2020**

(51) International Patent Classification (IPC):
**B60G 17/016** (2006.01)   **B62D 7/14** (2006.01)
**B60G 17/06** (2006.01)   **B60G 17/02** (2006.01)
**B62D 6/00** (2006.01)

(52) Cooperative Patent Classification (CPC):
**B60G 17/06; B60G 17/0162; B60G 17/02;**
B60G 2400/0511; B60G 2400/0521;
B60G 2400/0523; B60G 2400/104; B60G 2400/204;
B60G 2400/41; B60G 2400/412; B60G 2500/10;
B60G 2500/22; B60G 2500/40; B60G 2600/09;
B60G 2800/244;                           (Cont.)

(86) International application number:
**PCT/CN2020/117209**

(87) International publication number:
**WO 2022/061607 (31.03.2022 Gazette 2022/13)**

(54) **SUSPENSION CONTROL METHOD, AND VEHICLE**

AUFHÄNGUNGSSTEUERUNGSVERFAHREN UND FAHRZEUG

PROCÉDÉ DE COMMANDE DE SUSPENSION ET VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.07.2023   Bulletin 2023/27**

(73) Proprietor: **Shenzhen Yinwang Intelligent
Technologies Co., Ltd.
Shenzhen, Guangdong 518129 (CN)**

(72) Inventors:
• **JIN, Biao
Shenzhen, Guangdong 518129 (CN)**
• **ZHANG, Yongsheng
Shenzhen, Guangdong 518129 (CN)**
• **LIU, Donghao
Shenzhen, Guangdong 518129 (CN)**

(74) Representative: **Thun, Clemens
Mitscherlich PartmbB
Patent- und Rechtsanwälte
Karlstraße 7
80333 München (DE)**

(56) References cited:
**CN-A- 103 847 455      CN-A- 108 327 478
CN-A- 110 271 377      DE-A1- 102018 203 182
FR-A1- 2 891 772        US-A1- 2002 128 760
US-A1- 2005 236 782    US-A1- 2008 040 000
US-A1- 2017 197 485    US-A1- 2018 208 012**

(52) Cooperative Patent Classification (CPC): (Cont.)
B60G 2800/246; B62D 6/003

**Description**

**TECHNICAL FIELD**

This application relates to the field of vehicle control, and in particular, to a suspension control method and a vehicle.

**BACKGROUND**

A vehicle may perform oversteer or understeer during traveling. A traveling direction of the vehicle may be adjusted by braking tires that are on one side. Adjusting the traveling direction of the vehicle using a braking manner consumes a large amount of energy and causes abrasion of a vehicle braking system.
DE 10 2018 203182, US 2017/197485, US 2002/128760, US 2018/208012, FR 2 891 772, and US 2005/236782 relate to yaw rate control in vehicles. DE 10 2018 203182 discloses the preamble of claims 1 and 4.

**SUMMARY**

The invention is defined by the independent claims.
This application provides a suspension control method and a vehicle, to flexibly control a traveling direction of a vehicle during steering.
According to a first aspect, a suspension control method is provided. A suspension is applied to a vehicle, and the method includes: determining that the vehicle performs steering; and adjusting a deformation parameter of the suspension in response to the determining of the steering, to adjust a traveling direction of the vehicle.
When the vehicle performs steering, the traveling direction of the vehicle is adjusted by controlling the deformation parameter of the vehicle suspension, and no braking measure is required, to avoid large energy consumption and abrasion of a vehicle braking system.
With reference to the first aspect, according to the invention, the method further includes: determining an association relationship between a predicted yaw velocity of the vehicle and the deformation parameter of the suspension based on a status parameter of the vehicle, where the deformation parameter of the suspension is adjusted so that a deviation between a desired yaw velocity and the predicted yaw velocity of the vehicle is reduced.
The deformation parameter of the suspension is adjusted based on the association relationship between the predicted yaw velocity and the deformation parameter, so that the deviation between the desired yaw velocity and the predicted yaw velocity of the vehicle is reduced. In this way, the predicted yaw velocity of the vehicle meets the desired yaw velocity as much as possible, and control stability and comfort of the vehicle are improved.
With reference to the first aspect, in some possible implementations, the status parameter includes: a lateral acceleration, a centroid side slip angle, a front wheel steering angle corresponding to a steering wheel angle, a longitudinal vehicle speed, a sprung mass roll angle, and a sprung mass roll angle velocity.
The association relationship between the predicted yaw velocity of the vehicle and the deformation parameter of the suspension is determined based on the vehicle status parameters such as the lateral acceleration, the centroid side slip angle, the front wheel steering angle corresponding to the steering wheel angle, the longitudinal vehicle speed, the sprung mass roll angle, and the sprung mass roll angle velocity. The association relationship is more accurate, and control stability of the vehicle is improved.
With reference to the first aspect, in some possible implementations, the method further includes: determining the desired yaw velocity based on the longitudinal vehicle speed and the steering wheel angle of the vehicle.
The desired yaw velocity is determined based on the longitudinal vehicle speed and the steering wheel angle of the vehicle, so that the desired yaw velocity is more accurate, and control stability of the vehicle is improved.
With reference to the first aspect, according to the invention, the suspension includes a shock absorber, and the deformation parameter of the suspension includes damping of the shock absorber.
Compared with adjusting rigidity of a spring of the suspension, adjusting the damping of the shock absorber is easier.
According to a second aspect, a vehicle comprising a suspension, which comprises a shock absorber, and a suspension control apparatus is provided, including a processing module and an adjustment module. The processing module is configured to determine that a vehicle performs steering; and in response to the determining of the steering, the adjustment module is configured to adjust a deformation parameter of a suspension, to adjust a traveling direction of the vehicle.
With reference to the second aspect, according to the invention, the processing module is further configured to determine an association relationship between a predicted yaw velocity of the vehicle and the deformation parameter of the suspension based on a status parameter of the vehicle, where the deformation parameter of the suspension is adjusted

so that a deviation between a desired yaw velocity and the predicted yaw velocity of the vehicle is reduced.

With reference to the second aspect, in some possible implementations, the status parameter includes: a lateral acceleration, a centroid side slip angle, a front wheel steering angle corresponding to a steering wheel angle, a longitudinal vehicle speed, a sprung mass roll angle, and a sprung mass roll angle velocity.

With reference to the second aspect, in some possible implementations, the processing module is further configured to determine the desired yaw velocity based on the longitudinal vehicle speed and the steering wheel angle of the vehicle.

With reference to the second aspect, according to the invention, the suspension includes a shock absorber, and the deformation parameter of the suspension includes damping of the shock absorber.

According to a third aspect, a computer program storage medium is provided. The computer program storage medium includes program instructions, and when the program instructions are executed, the method according to the first aspect is performed.

According to a fourth aspect, a chip is provided. The chip system includes at least one processor, and when program instructions are executed in the at least one processor, the method according to the first aspect is performed.

Optionally, in an implementation, the chip may further include the memory, and the memory stores the instructions. The processor is configured to execute the instructions stored in the memory, and when the instructions are executed, the processor is configured to perform the method in any one of the implementations of the first aspect or the second aspect.

The foregoing chip may be specifically a field-programmable gate array (field-programmable gate array, FPGA) or an application-specific integrated circuit (application-specific integrated circuit, ASIC).

## BRIEF DESCRIPTION OF DRAWINGS

FIG. 1 is a schematic diagram of a manner of adjusting a traveling direction of a vehicle when the vehicle performs understeer;

FIG. 2 is a schematic diagram of a manner of adjusting a traveling direction of a vehicle when the vehicle performs oversteer;

FIG. 3 is a schematic flowchart of a suspension control method according to an embodiment of this application;

FIG. 4 is a schematic diagram of a relationship between a load force of a tire and a maximum lateral force of the tire;

FIG. 5 is a schematic diagram of a structure of a vehicle;

FIG. 6 is a schematic diagram of a structure of a suspension control system according to an embodiment of this application;

FIG. 7 is a schematic diagram of damping of a shock absorber that is output by a suspension control system according to an embodiment of this application;

FIG. 8 is a schematic diagram of a change of a yaw velocity with time;

FIG. 9 is a schematic diagram of a structure of a suspension control apparatus according to an embodiment of this application; and

FIG. 10 is a schematic diagram of a structure of another suspension control apparatus according to an embodiment of this application.

## DESCRIPTION OF EMBODIMENTS

The following describes technical solutions of this application with reference to accompanying drawings.

A vehicle may perform oversteer or understeer during traveling.

An electronic stability control system (electronic stability controller, ESC) can obtain a traveling speed and a steering wheel angle of the vehicle to determine a riving status of the vehicle. The ESC system can obtain an actual driving status of the vehicle. When the actual driving status of the vehicle is different from the driving status of the vehicle, the ESC system controls to perform a braking operation on one or more wheels, to adjust a traveling direction of the vehicle.

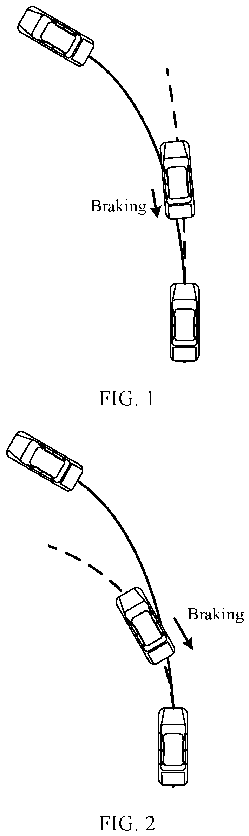

A driver controls steering of the vehicle by rotating the steering wheel. A desired traveling track of the vehicle may be calculated based on the traveling speed and the steering wheel angle of the vehicle, as shown by a solid line in FIG. 1. Due to factors such as excessively small friction of a road surface, if the driver does not obtain feedback in a vehicle steering process, an actual driving route of the vehicle may be, as shown by a dashed line in FIG. 1, understeer.

The ESC may determine the actual driving route of the vehicle based on a yaw velocity of the vehicle and the traveling speed of the vehicle.

When the vehicle performs understeer, the ESC may control to perform a braking operation on an inner wheel, and/or control an engine to reduce a rotational speed of the inner wheel. For example, the ESC determines that the vehicle performs understeer when turning left, and the ESC controls to perform a braking operation on a left wheel of the vehicle, so that the vehicle further turns left and travels along the desired traveling track of the vehicle.

Certainly, the vehicle may perform oversteer. The ESC may control to perform a braking operation on an outer wheel, and/or control the engine to reduce a rotational speed of the outer wheel. As shown in FIG. 2, the ESC determines that the vehicle performs oversteer when turning left, and the ESC controls to perform a braking operation on a right wheel of the vehicle, to reduce a degree of turning left of the vehicle, so that the vehicle travels along the desired traveling track.

The ESC may adjust, by controlling a braking system and/or a power system, a longitudinal force in a vehicle forward direction and a lateral force in a vehicle steering direction that are applied to each wheel, and control the yaw velocity of the vehicle, to correct a traveling direction and a driving track of the vehicle.

In a vehicle steering process, the ESC adjusts a change of a traveling direction of the vehicle in a braking manner, and consequently, energy consumption is large, and the braking system of the vehicle is worn. In addition, the vehicle is adjusted only in a case of understeer and oversteer.

To resolve the foregoing problem, a suspension control method and a vehicle are provided, to reduce energy consumption and abrasion of a vehicle braking system caused by adjustment of a traveling direction of a vehicle in a vehicle steering process, and improve comfort and safety of the vehicle.

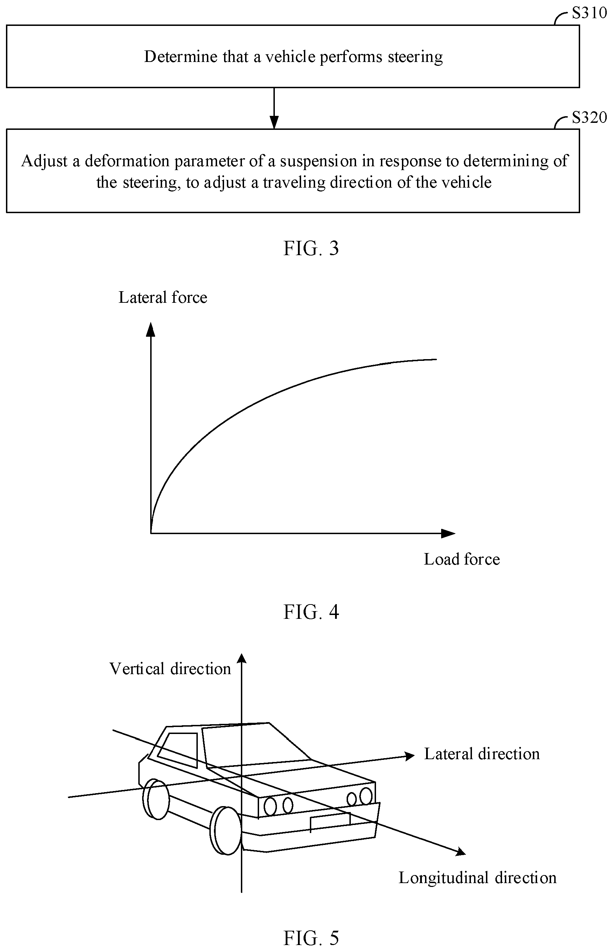

FIG. 3 is a schematic flowchart of a suspension control method according to an embodiment of this application.

A suspension is a general term of force transfer connection apparatuses between a vehicle frame of (or bearing a vehicle body) and a vehicle bridge (or wheels) that are of an automobile. The suspension is used to transfer a force and torque between the wheel and the vehicle frame, buffer an impact force transferred from an uneven road to the vehicle frame or the vehicle body, and reduce vibration caused by the impact force, to ensure that the vehicle can travel smoothly.

Suspensions are used in vehicles.

S310: Determine that the vehicle performs steering.

Vehicle steering means that a traveling direction of a vehicle changes, and the vehicle no longer travels along a longitudinal direction to which a vehicle head points. A vehicle speed includes a longitudinal vehicle speed in the longitudinal direction and a lateral vehicle speed in a lateral direction perpendicular to the longitudinal direction.

When a steering wheel angle of the vehicle is greater than a preset angle, it may be determined that the vehicle performs steering.

A value of the steering wheel angle of the vehicle is in a one-to-one correspondence with a value of a front wheel steering angle of the vehicle. When the front wheel steering angle of the vehicle is greater than a preset angle, it may also be determined that the vehicle performs steering.

In other words, that the vehicle performs steering may be determined based on information sent by a sensor used to measure a steering wheel angle, or that the vehicle performs steering may be determined based on information sent by a sensor used to measure a front wheel steering angle, or another in-vehicle sensor.

S320: Adjust a deformation parameter of the suspension in response to the determining of the steering, to adjust the traveling direction of the vehicle.

The suspension includes a spring and a shock absorber. The deformation parameter of the suspension includes damping of the shock absorber.

To be specific, the vehicle may use an active suspension or a semi-active suspension. The active suspension and the semi-active suspension are both controllable suspension systems. Deformation parameters of the semi-active suspension such as rigidity of a spring and damping of a shock absorber can be adjusted. Deformation parameters of the active suspension can be adjusted, and an action force can also be applied to a tire.

Preferably, the vehicle may use the semi-active suspension. Compared with adjusting the rigidity of the spring, adjusting the damping of the shock absorber is easier.

In a vehicle steering process, a change of the traveling direction of the vehicle may be adjusted by adjusting the deformation parameter of the suspension, to implement flexible control on the traveling direction of the vehicle. For details, refer to the description in FIG. 4.

Adjusting the traveling direction of the vehicle may be understood as adjusting a yaw velocity of the vehicle, or may be understood as adjusting of a yaw acceleration of the vehicle.

The yaw velocity may also be referred to as a yaw rate, and is a derivative of an angle to time at which a vehicle rotates around an axis perpendicular to the ground.

The deformation parameter of the suspension can be adjusted based on a deviation between an actual yaw velocity and a desired yaw velocity.

Alternatively, an association relationship between a predicted yaw velocity of the vehicle and the deformation parameter of the suspension may be determined based on a status parameter of the vehicle. The deformation parameter of the suspension is adjusted, so that a deviation between the desired yaw velocity and the predicted yaw velocity of the vehicle is reduced.

Before S320, the association relationship between the predicted yaw velocity of the vehicle and the deformation parameter of the suspension may be determined. The status parameter of the vehicle may be measured, and the relationship between the predicted yaw velocity of the vehicle and the deformation parameter of the suspension is determined based on the status parameter of the vehicle. The status parameter of the vehicle may include a lateral acceleration, a centroid side slip angle, a front wheel steering angle corresponding to a steering wheel angle, a longitudinal vehicle speed, a sprung mass roll angle, a sprung mass roll angle velocity, and the like.

When the association relationship between the predicted yaw velocity of the vehicle and the deformation parameter of the suspension is determined, a mass of the vehicle, a rear wheelbase of the vehicle, a front wheelbase of the vehicle, moment of inertia of the vehicle during steering, and the like may be further obtained.

Before S320, the longitudinal vehicle speed and the steering wheel angle of the vehicle may be obtained. In this way, a desired yaw velocity in the traveling direction of the vehicle may be determined based on the vehicle speed and the steering wheel angle.

There is a one-to-one correspondence between the steering wheel angle of the vehicle and the front wheel steering angle of the vehicle. Alternatively, the longitudinal vehicle speed of the vehicle and the front wheel steering angle of the vehicle may be obtained, and the desired yaw velocity in the traveling direction of the vehicle is determined based on the longitudinal vehicle speed of the vehicle and the front wheel steering angle of the vehicle.

In S320, the deformation parameter of the vehicle suspension may be adjusted based on the association relationship between the predicted yaw velocity of the vehicle and the deformation parameter of the suspension, so that the deviation between the desired yaw velocity and the predicted yaw velocity of the vehicle is reduced. In other words, an association relationship between the deformation parameter of the suspension, and the deviation between the desired yaw velocity and the predicted yaw velocity of the vehicle may be determined based on the association relationship between the predicted yaw velocity of the vehicle and the deformation parameter of the suspension, so that the deformation parameter of the suspension may be adjusted to minimize the deviation. For example, the deformation parameter of the suspension is adjusted, so that the deviation between the desired yaw velocity and the predicted yaw velocity of the vehicle is less than a preset value.

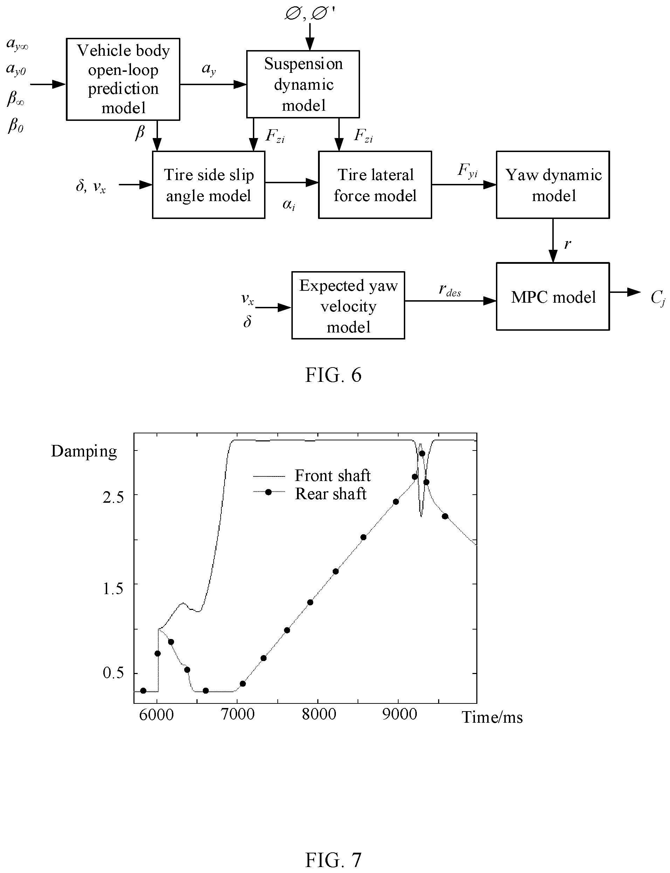

Specifically, a suspension control system shown in FIG. 6 may be used to adjust the deformation parameter of the suspension.

FIG. 4 is a schematic diagram of a relationship between a load force of a tire and a maximum lateral force of the tire.

In a process in which the vehicle turns left, adjusting the deformation parameter of the suspension may be to increase or decrease damping of the shock absorber of the vehicle.

Before increasing the damping of the shock absorber of the vehicle, a spring in the suspension has a large deformation, and the vehicle has a large roll angle to the right. The mass center of the vehicle moves towards the right side of the vehicle because roll of the vehicle. A load force of a right wheel of the vehicle is larger, and a load force of a left wheel of the vehicle is smaller.

The damping of the shock absorber of the vehicle is increased, the deformation of the spring in the element in the suspension system and the vertical direction.

FIG. 6 is a schematic diagram of a structure of a suspension control system according to an embodiment of this application. The suspension control system is applicable to a vehicle that uses an independent suspension or a non-independent suspension and includes four tires.

For a vehicle using an independent suspension, deformation parameters of left and right suspensions of the front shaft may be the same, and deformation parameters of left and right suspensions of the rear shaft may be the same. Therefore, difficulty in determining a deformation parameter of the suspension can be reduced.

The suspension control system includes a vehicle body open-loop model, a tire side slip angle model, a suspension dynamic model, a desired yaw velocity model, a tire lateral force model, a yaw dynamic model and an MPC model.

In order to reduce a calculation amount of the suspension control system, a yaw-roll coupling dynamic model is simplified.

For lateral motion, a simplified vehicle body open-loop model does not need to perform iterative calculation. Open-loop prediction is performed based on a current vehicle status to obtain the lateral acceleration and a change trend of the centroid side slip angle, and the change trend is recorded in the form of a time sequence.

A simplified vehicle body open-loop model may be expressed as follows:

$$a_y(t) = e^{\tau_{a_y} t}\left(c_1 \sin \omega_{a_y} t + c_2 \cos \omega_{a_y} t\right) + a_{y\infty}$$

$$\beta(t) = e^{\tau_\beta t}\left(c_3 \sin \omega_\beta t + c_4 \cos \omega_\beta t\right) + \beta_\infty$$

$a_y$ is the lateral acceleration of the vehicle, and $\beta$ is a function of time. The centroid side slip angle of the vehicle

$\alpha_{y\infty}$ is a steady-state value of the lateral acceleration determined based on a front wheel steering angle and the longitudinal vehicle speed, and $\beta_\infty$ is a steady-state value of the centroid side slip angle determined based on the front wheel steering angle and the longitudinal vehicle speed. $\omega_{ay}$, $\omega_\beta$, $\tau_{ay}$, and $\tau_\beta$ are constants. In some embodiments, $\omega_{ay} = \pi$, $\omega_\beta = 1.6\pi$, $\tau_{ay} = -4$, $\tau_\beta = -1.2$, $c_1$, and $c_2$ are obtained through calculation based on the steady-state value of the lateral acceleration $\alpha_{y\infty}$ and a lateral acceleration $\alpha_{y0}$ at a moment t=0, $c_3$ and $c_4$ are obtained through calculation based on the steady-state value of the centroid side slip angle $\beta_\infty$ and a centroid side slip angle $\beta_0$ at a moment t=0, and $c_1$, $c_2$, $c_3$, and $c_4$ may be respectively represented as follows:

In a process of adjusting shock absorber damping of a suspension by using the suspension control system provided in this embodiment of this application, in the relationship between the predicted yaw velocity $r$, and the shock absorber damping $C_f$ of the front shaft suspension and the shock absorber damping $C_r$ of the rear shaft suspension, the shock absorber damping $C_f$ of the front shaft suspension and the shock absorber damping $C_r$ of the rear shaft suspension are control values. That is, the predicted yaw velocity may be adjusted by adjusting $C_f$ and $C_r$.

The desired yaw velocity model may be expressed as follows:

$$r_{des} = \begin{cases} r_0, & 0 \leq r_0 \leq 0.85 \dfrac{\mu g}{v_x} \\[4mm] 0.85 \dfrac{\mu g}{v_x}, & r_0 > 0.85 \dfrac{\mu g}{v_x} \end{cases}$$

$r_{des}$ is the desired yaw velocity, and $r_0$ may be expressed as follows:

$$r_0 = \frac{v_x \delta}{\left(l_f + l_r\right) + \dfrac{m\left(l_r K_r - l_f K_f\right) v_x^2}{2\left(l_f + l_r\right) K_f K_r}}$$

$m$ is a mass of the vehicle, $v_x$ is the longitudinal vehicle speed of the vehicle, $\delta$ is the front wheel steering angle of the vehicle, $K_r$ is cornering stiffness of the tire connected to the rear shaft suspension, $K_f$ is cornering stiffness of the tire connected to the front shaft suspension, and $K_r$ and $K_f$ are both preset values. The front wheel steering angle of the vehicle $\delta$ is determined by the steering wheel angle.

According to the invention, the MPC model is used to represent a deviation between the desired yaw velocity and the predicted yaw velocity. The MPC model can be expressed as follows:

$$L = \int_0^T \left(k(r - r_{des})^2 + k_C C_j C_j^T\right) dt$$

$r$ is the predicted yaw velocity of the vehicle, $k$ and $k_c$ are constant coefficients, a value of $k$ is usually $10^{12.5}$, a value of $k_c$ is usually 1, $r_{des}$ is the desired yaw velocity, and $C_j$ is the shock absorber damping $C_f$ of the front shaft suspension or the shock absorber damping $C_r$ of the rear shaft suspension.

When the front shaft suspension and the rear shaft suspension are both semi-active suspensions, as $C_j$, $C_j$, and $C_r$ can be optimized by the MPC model.

A value of the shock absorber damping $C_j$ is adjusted and the deviation $L$ between the desired yaw velocity and the predicted yaw velocity is minimized, so that a shock absorber damping $C_j$ can be obtained to minimize the deviation $L$.

In an integral operation of the MPC model, a sprung mass roll angle acceleration $\varnothing''$ can be determined by a roll dynamic model. The sprung mass roll angle acceleration $\varnothing''$ is the derivative of the sprung mass roll angle velocity $\varnothing'$, and may be understood as a change trend of the sprung mass roll angle velocity $\varnothing'$. The roll dynamic model is as follows:

$$\varnothing'' = \frac{ma_y h_s - K_\varnothing \varnothing - K_{\dot\varnothing} \varnothing'}{I_{xx}}$$

$I_{xx}$ is a roll moment of inertia of the vehicle, $K_\varnothing$ and $K_{\varnothing'}$ are constant coefficients, and $h_s$ is a height difference between the mass center of the vehicle and a roll center (that is, a force arm of roll motion). The roll moment of inertia $I_{xx}$ may

be understood as moment of inertia of vehicle roll motion, that is, moment of inertia existing when the vehicle rotates around an axis in a longitudinal direction.

In an integral operation of the MPC model, a prediction time domain T may be, for example, 0.2 second (second, s), and a sampling time dt may be, for example, 0.01 s. In this case, a quantity of prediction steps of the MPC module is 20.

In order to make mechanical parameters of the suspension conform to an actual situation, the deformation parameter of the suspension should be constrained.

The shock absorber damping may be constrained. Generally, an adjustment range of a suspension damper is from 0 to 30,000 N·s/m (N•s/m). At the same time, a damping setup time of a common magneto-rheological shock absorber is approximately 10 ms. Therefore, damping output by a controller cannot change excessively. The shock absorber damping can be adjusted through incremental control. The incremental control of the shock absorber damping is to control a change process of the shock absorber damping, so that the increment of the shock absorber damping per unit time remains unchanged (or the decrement remains unchanged), and an abrupt change of a control value can be suppressed to some extent.

A stroke of the suspension is approximately about 10 cm and does not exceed 15 cm. The stroke of the suspension refers to a difference between a maximum value of a spring compression deformation and a maximum
The processing module 2010 is configured to determine that a vehicle performs steering.

The adjustment module 2020 is configured to adjust a deformation parameter of a suspension in response to the determining of the steering, to adjust a traveling direction of the vehicle.

Optionally, the processing module 2010 is further configured to determine an association relationship between a predicted yaw velocity of the vehicle and the deformation parameter of the suspension based on a status parameter of the vehicle.

The deformation parameter of the suspension is adjusted so that a deviation between a desired yaw velocity and the predicted yaw velocity of the vehicle is reduced.

Optionally, the status parameter includes: a lateral acceleration, a centroid side slip angle, a front wheel steering angle corresponding to a steering wheel angle, a longitudinal vehicle speed, a sprung mass roll angle, and a sprung mass roll angle velocity.

Optionally, the processing module 2010 is further configured to determine the desired yaw velocity based on the longitudinal vehicle speed and the steering wheel angle of the vehicle.

The suspension includes a shock absorber, and the deformation parameter of the suspension includes damping of the shock absorber.

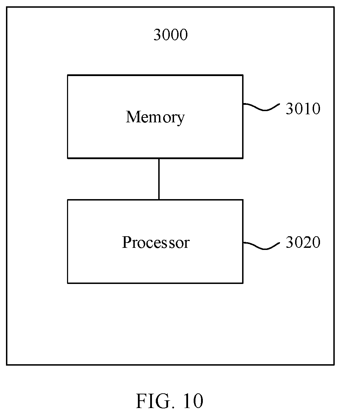

FIG. 10 is a schematic diagram of a structure of a communications apparatus according to an embodiment of this application.

The communications apparatus 3000 includes a memory 3010 and a processor 3020.

The memory 3010 is configured to store program instructions.

When the program instructions are executed in the processor 3020, the processor 3020 is configured to:

determine that a vehicle performs steering; and
adjust a deformation parameter of a suspension in response to the determining of the steering, to adjust a traveling direction of the vehicle.

Optionally, the processor 3020 is further configured to determine an association relationship between a predicted yaw velocity of the vehicle and the deformation parameter of the suspension based on a status parameter of the vehicle.

The deformation parameter of the suspension is adjusted so that a deviation between a desired yaw velocity and the predicted yaw velocity of the vehicle is reduced.

Optionally, the status parameter includes: a lateral acceleration, a centroid side slip angle, a front wheel steering angle corresponding to a steering wheel angle, a longitudinal vehicle speed, a sprung mass roll angle, and a sprung mass roll angle velocity.

Optionally, the processor 3020 is further configured to determine the desired yaw velocity based on the longitudinal vehicle speed and the steering wheel angle of the vehicle.

According to the invention, the suspension includes a shock absorber, and the deformation parameter of the suspension includes damping of the shock absorber.

An embodiment of this application further provides a vehicle, including a suspension and the foregoing suspension control apparatus.

According to an embodiment of this application, a computer program storage medium is further provided. The computer program storage medium has program instructions, and when the program instructions are executed, the foregoing method is performed.

According to an embodiment of this application, a chip system is further provided. The chip system includes at least one processor, and when program instructions are executed by the at least one processor, the foregoing method is performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In embodiments of this application, "at least one" means one or more, and "a plurality of" means two or more. A term "and/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following" and a similar expression thereof indicate any combination of these items, including a single item or any combination of a plurality of items. For example, "at least one of a, b, and c" may represent a, b, c, a-b, a-c, b-c, or a-b-c, where a, b, and c may be singular or plural. It may be clearly understood by a person skilled in the art that, for the purpose of convenient and brief description, for a detailed working process of the foregoing system, apparatus, and unit, refer to a corresponding process in the foregoing method embodiments. Details are not described herein again. value of a spring extension deformation, that is, a distance between a lowest point and a highest point of compression and extension deformations.

The suspension control system shown in FIG. 6 is used to adjust the shock absorber damping of the vehicle suspension when the vehicle performs steering, to adjust the load force of each tire of the vehicle, so as to adjust the lateral force of the tire, thereby adjusting the yaw velocity. In the suspension control system shown in FIG. 6, a roll motion and a steering motion of a vehicle in a steering process are comprehensively considered, so that the steering of the vehicle is controlled more accurately, abrasion of a vehicle braking system caused by control of a traveling direction of the vehicle during the steering of the vehicle is reduced, and comfort and safety of the vehicle are improved.

The suspension control system shown in FIG. 6 is used to adjust the shock absorber damping of the suspension of the vehicle, and simulation is performed by using the CarMaker software. The shock absorber damping of the front shaft suspension and the shock absorber damping of the rear shaft suspension of the vehicle output by the MPC model is shown in FIG. 7.

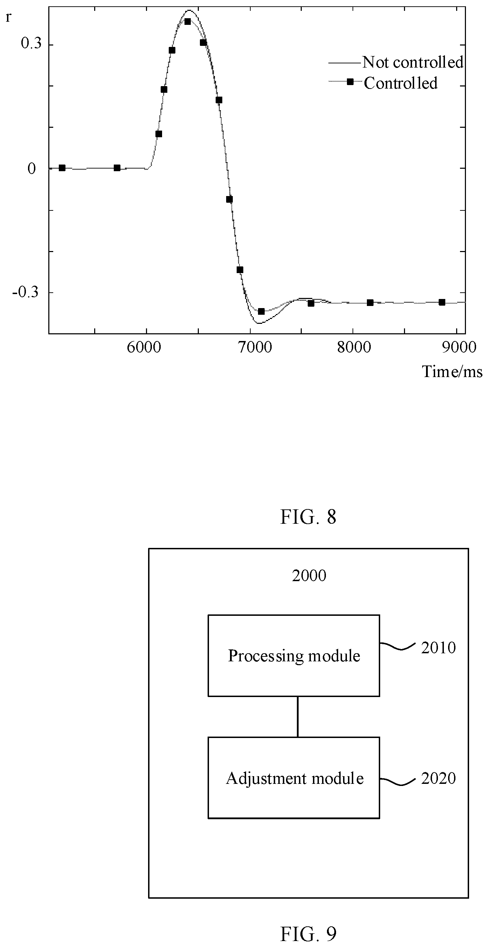

Based on an output of the MPC model shown in FIG. 7, the shock absorber damping of the front shaft suspension and the shock absorber damping of the rear shaft suspension of the vehicle is adjusted. A change of an actual yaw velocity of the vehicle with time is shown by a curve corresponding to "controlled" in FIG. 8. A curve corresponding to "not controlled" in FIG. 8 shows a change of an actual yaw velocity of the vehicle with time when the shock absorber damping of the suspension is not adjusted.

It can be learned from FIG. 7 and FIG. 8 that, according to the suspension control method provided in embodiments of this application, overshoot of the yaw velocity of the vehicle is suppressed to some extent at approximately 6400 millisecond (ms) and 7000 ms, so that driving comfort of the vehicle can be improved.

According to the suspension control method provided in embodiments of this application, transient control of the yaw velocity is implemented, and a response speed to the yaw velocity of the vehicle is high, so that the vehicle has high maneuverability and stability.

The suspension control method provided in embodiments of this application may be used together with a method for adjusting a traveling direction of a vehicle in a braking manner, to improve accurate control of a traveling direction of a vehicle.

FIG. 9 is a schematic diagram of a structure of a suspension control apparatus according to an embodiment of this application.

The suspension control apparatus 2000 includes a processing module 2010 and an adjustment module 2020.

The processing module 2010 is configured to determine that a vehicle performs steering.

The adjustment module 2020 is configured to adjust a deformation parameter of a suspension in response to the determining of the steering, to adjust a traveling direction of the vehicle.

Optionally, the processing module 2010 is further configured to determine an association relationship between a predicted yaw velocity of the vehicle and the deformation parameter of the suspension based on a status parameter of the vehicle.

The deformation parameter of the suspension is adjusted so that a deviation between an expected yaw velocity and the predicted yaw velocity of the vehicle is reduced.

Optionally, the status parameter includes: a lateral acceleration, a centroid side slip angle, a front wheel steering angle corresponding to a steering wheel angle, a longitudinal vehicle speed, a sprung mass roll angle, and a sprung mass roll angle velocity.

Optionally, the processing module 2010 is further configured to determine the expected yaw velocity based on the longitudinal vehicle speed and the steering wheel angle of the vehicle.

The suspension includes a shock absorber, and the deformation parameter of the suspension includes damping of the shock absorber.

FIG. 10 is a schematic diagram of a structure of a communications apparatus according to an embodiment of this application.

The communications apparatus 3000 includes a memory 3010 and a processor 3020.

The memory 3010 is configured to store program instructions.

When the program instructions are executed in the processor 3020, the processor 3020 is configured to:

determine that a vehicle performs steering; and
adjust a deformation parameter of a suspension in response to the determining of the steering, to adjust a traveling direction of the vehicle.

Optionally, the processor 3020 is further configured to determine an association relationship between a predicted yaw velocity of the vehicle and the deformation parameter of the suspension based on a status parameter of the vehicle.

The deformation parameter of the suspension is adjusted so that a deviation between an expected yaw velocity and the predicted yaw velocity of the vehicle is reduced.

Optionally, the status parameter includes: a lateral acceleration, a centroid side slip angle, a front wheel steering angle corresponding to a steering wheel angle, a longitudinal vehicle speed, a sprung mass roll angle, and a sprung mass roll angle velocity.

Optionally, the processor 3020 is further configured to determine the expected yaw velocity based on the longitudinal vehicle speed and the steering wheel angle of the vehicle.

According to the invention, the suspension includes a shock absorber, and the deformation parameter of the suspension includes damping of the shock absorber.

An embodiment of this application further provides a vehicle, including a suspension and the foregoing suspension control apparatus.

According to an embodiment of this application, a computer program storage medium is further provided. The computer program storage medium has program instructions, and when the program instructions are executed, the foregoing method is performed.

According to an embodiment of this application, a chip system is further provided. The chip system includes at least one processor, and when program instructions are executed by the at least one processor, the foregoing method is performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In embodiments of this application, "at least one" means one or more, and "a plurality of" means two or more. A term "and/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following" and a similar expression thereof indicate any combination of these items, including a single item or any combination of a plurality of items. For example, "at least one of a, b, and c" may represent a, b, c, a-b, a-c, b-c, or a-b-c, where a, b, and c may be singular or plural. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In the several embodiments provided in this application, it should be understood that the disclosed systems, apparatuses, and methods may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units.

Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application.

**Claims**

1. A suspension control method, for a suspension being applied to a vehicle and comprising a shock absorber, the method comprising:

    determining (S310) that the vehicle performs steering; and
    adjusting (S320) a deformation parameter of the suspension, by adjusting damping of the shock absorber, in response to the determining of the steering, to adjust a traveling direction of the vehicle,
    **characterized in that** the method further comprises:

    determining an association relationship between a predicted yaw velocity $r$ of the vehicle and the deformation parameter of the suspension based on a status parameter of the vehicle, wherein
    the deformation parameter of the suspension is adjusted so that a deviation L, modelled based on a difference between a desired yaw velocity $r_{des}$ and the predicted yaw velocity $r$ of the vehicle, is reduced, wherein the deviation L is determined as:

    $$L = \int_0^T (k(r - r_{des})^2 + k_c C_j C_j^{\,T}) dt,$$

    wherein T is a prediction time domain, $k$ and $k_c$ are constant coefficients, and $C_j$ is a shock absorber damping of a front shaft suspension or a shock absorber damping of a rear shaft suspension.

2. The method according to claim 1, wherein the status parameter comprises: a lateral acceleration, a centroid side slip angle, a front wheel steering angle corresponding to a steering wheel angle, a longitudinal vehicle speed, a sprung mass roll angle, and a sprung mass roll angle velocity.

3. The method according to claim 1 or 2, wherein the method further comprises: determining the desired yaw velocity based on the longitudinal vehicle speed and the steering wheel angle of the vehicle.

4. A vehicle, comprising a suspension, which comprises a shock absorber, and comprising a suspension control apparatus,

wherein the suspension control apparatus (2000) is for the suspension,
wherein the suspension control apparatus (2000) comprises a shock absorber and is applied to a vehicle, the apparatus (2000) comprising a processing module (2010) and an adjustment module (2020), wherein
the processing module (2010) is configured to determine that the vehicle performs steering; and
the adjustment module (2020) is configured to adjust a deformation parameter of the suspension, by adjusting damping of the shock absorber, in response to the determining of the steering, to adjust a traveling direction of the vehicle, **characterized in that**
the processing module (2010) is further configured to determine an association relationship between a predicted yaw velocity $r$ of the vehicle and the deformation parameter of the suspension based on a status parameter of the vehicle, wherein
the adjustment module (2020) is configured to adjust the deformation parameter of the suspension so that a deviation L, modeled based on a difference between an desired yaw velocity $r_{des}$ and the predicted yaw velocity $r$ of the vehicle, is reduced,
wherein the deviation L is determined as:

$$L = \int_0^T (k(r - r_{des})^2 + k_C C_j C_j^T) dt,$$

wherein T is a prediction time domain, $k$ and $k_c$ are constant coefficients, and $C_j$ is a shock absorber damping of a front shaft suspension or a shock absorber damping of a rear shaft suspension.

5. The vehicle according to claim 4, wherein the status parameter comprises: a lateral acceleration, a centroid side slip angle, a front wheel steering angle corresponding to a steering wheel angle, a longitudinal vehicle speed, a sprung mass roll angle, and a sprung mass roll angle velocity.

6. The vehicle according to claim 4 or 5, wherein the processing module (2010) is further configured to determine the desired yaw velocity based on the longitudinal vehicle speed and the steering wheel angle of the vehicle.

7. A computer program storage medium, wherein the computer program storage medium comprises executable program instructions for the suspension control apparatus of the suspension of the vehicle according to claim 4, wherein the program instructions are configured to cause the suspension control apparatus controlling the suspension, comprising the shock absorber and applied to the vehicle, to perform the method according to any one of claims 1 to 3.

8. A chip, wherein the chip comprises at least one processor and executable program instructions configured to cause the at least one processor controlling the suspension of the vehicle according to claim 4, comprising the shock absorber and applied to the vehicle, to perform the method according to any one of claims 1 to 3.

**Patentansprüche**

1. Aufhängungssteuerungsverfahren für eine Aufhängung, die auf ein Fahrzeug angewendet wird und einen Stoßdämpfer umfasst, wobei das Verfahren Folgendes umfasst:

Bestimmen (S310), dass das Fahrzeug eine Lenkung durchführt; und
Einstellen (S320) eines Verformungsparameters der Aufhängung durch Einstellen des Dämpfens des Stoßdämpfers als Reaktion auf das Bestimmen der Lenkung, um eine Fahrtrichtung des Fahrzeugs einzustellen, **dadurch gekennzeichnet, dass** das Verfahren ferner Folgendes umfasst:

Bestimmen einer Zuordnungsbeziehung zwischen einer vorhergesagten Giergeschwindigkeit r des Fahrzeugs und dem Verformungsparameter der Aufhängung basierend auf einem Statusparameter des Fahrzeugs, wobei der Verformungsparameter der Aufhängung eingestellt wird, sodass eine Abweichung $L$, die basierend auf einer Differenz zwischen einer gewünschten Giergeschwindigkeit $r_{des}$ und der vorhergesagten Giergeschwindigkeit r des Fahrzeugs modelliert wird, verringert wird,
wobei die Abweichung L wie folgt bestimmt wird:

$$L = \int_0^T (k(r - r_{des})^2 + k_C C_j C_j^T) dt,$$

wobei $T$ ein Vorhersagezeitbereich ist, $k$ und $k_c$ konstante Koeffizienten sind und $C_j$ eine Stoßdämpferdämpfung einer Vorderwellenaufhängung oder eine Stoßdämpferdämpfung einer Hinterwellenaufhängung ist.

2. Verfahren nach Anspruch 1, wobei der Statusparameter Folgendes umfasst: eine Querbeschleunigung, einen Schwerpunktseitenschräglaufwinkel, einen Vorderradlenkwinkel, der mit einem Lenkradwinkel korrespondiert, eine Fahrzeuglängsgeschwindigkeit, einen Wankwinkel einer gefederten Masse und eine Geschwindigkeit bei einem Wankwinkel einer gefederten Masse.

3. Verfahren nach Anspruch 1 oder 2, wobei das Verfahren ferner Folgendes umfasst: Bestimmen der gewünschten Giergeschwindigkeit basierend auf der Fahrzeuglängsgeschwindigkeit und dem Lenkradwinkel des Fahrzeugs.

4. Fahrzeug, das eine Aufhängung, die einen Stoßdämpfer umfasst, umfasst und eine Aufhängungssteuerungsvorrichtung umfasst,

wobei die Aufhängungssteuerungsvorrichtung (2000) für die Aufhängung vorgesehen ist,
wobei die Aufhängungssteuerungsvorrichtung (2000) einen Stoßdämpfer umfasst und auf ein Fahrzeug angewendet wird, wobei die Vorrichtung (2000) ein Verarbeitungsmodul (2010) und ein Einstellmodul (2020) umfasst, wobei
das Verarbeitungsmodul (2010) konfiguriert ist, zu bestimmen, dass das Fahrzeug eine Lenkung durchführt; und
das Einstellmodul (2020) konfiguriert ist, einen Verformungsparameter der Aufhängung durch Einstellen des Dämpfens des Stoßdämpfers als Reaktion auf das Bestimmen der Lenkung einzustellen, um eine Fahrtrichtung des Fahrzeugs einzustellen,
**dadurch gekennzeichnet, dass**
das Verarbeitungsmodul (2010) ferner konfiguriert ist, eine Zuordnungsbeziehung zwischen einer vorhergesagten Giergeschwindigkeit $r$ des Fahrzeugs und dem Verformungsparameter der Aufhängung basierend auf einem Statusparameter des Fahrzeugs zu bestimmen, wobei
das Einstellmodul (2020) konfiguriert ist, den Verformungsparameter der Aufhängung einzustellen, sodass eine Abweichung $L$, die basierend auf einer Differenz zwischen einer gewünschten Giergeschwindigkeit $r_{des}$ und der vorhergesagten Giergeschwindigkeit $r$ des Fahrzeugs modelliert wird, verringert wird,
wobei die Abweichung $L$ wie folgt bestimmt wird:

$$L = \int_0^T (k(r - r_{des})^2 + k_C C_j C_j^T) dt,$$

wobei $T$ ein Vorhersagezeitbereich ist, $k$ und $k_c$ konstante Koeffizienten sind und $C_j$ eine Stoßdämpferdämpfung einer Vorderwellenaufhängung oder eine Stoßdämpferdämpfung einer Hinterwellenaufhängung ist.

5. Fahrzeug nach Anspruch 4, wobei der Statusparameter Folgendes umfasst: eine Querbeschleunigung, einen Schwerpunktseitenschräglaufwinkel, einen Vorderradlenkwinkel, der mit einem Lenkradwinkel korrespondiert, eine Fahrzeuglängsgeschwindigkeit, einen Wankwinkel einer gefederten Masse und eine Geschwindigkeit bei einem Wankwinkel einer gefederten Masse.

6. Fahrzeug nach Anspruch 4 oder 5, wobei das Verarbeitungsmodul (2010) ferner konfiguriert ist, die gewünschte Giergeschwindigkeit basierend auf der Fahrzeuglängsgeschwindigkeit und dem Lenkradwinkel des Fahrzeugs zu bestimmen.

7. Computerprogrammspeichermedium, wobei das Computerprogrammspeichermedium ausführbare Programmbefehle für die Aufhängungssteuerungsvorrichtung der Aufhängung des Fahrzeugs nach Anspruch 4 umfasst, wobei die Programmbefehle konfiguriert sind, zu bewirken, dass die Aufhängungssteuerungsvorrichtung die Aufhängung, die den Stoßdämpfer umfasst und auf das Fahrzeug angewendet wird, steuert, um das Verfahren nach einem der Ansprüche 1 bis 3 durchzuführen.

8. Chip, wobei der Chip mindestens einen Prozessor und ausführbare Programmbefehle umfasst, die konfiguriert sind, zu bewirken, dass der mindestens eine Prozessor die Aufhängung des Fahrzeugs nach Anspruch 4, die den

EP 4 206 005 B1

Stoßdämpfer umfasst und auf das Fahrzeug angewendet wird, steuert, um das Verfahren nach einem der Ansprüche 1 bis 3 durchzuführen.

**Revendications**

1. Procédé de commande de suspension, pour une suspension appliquée à un véhicule et comprenant un amortisseur, le procédé comprenant les étapes consistant à :

   déterminer (S310) que le véhicule effectue un virage ; et
   régler (S320) un paramètre de déformation de la suspension, en réglant un amortissement de l'amortisseur, en réponse à la détermination du virage, pour régler une direction de déplacement du véhicule,
   le procédé étant **caractérisé en ce qu'**il comprend en outre l'étape consistant à :

   déterminer une relation d'association entre une vitesse de lacet prédite r du véhicule et le paramètre de déformation de la suspension, sur la base d'un paramètre d'état du véhicule,
   le paramètre de déformation de la suspension étant réglé de telle sorte qu'un écart L, modélisé sur la base d'une différence entre une vitesse de lacet souhaitée $r_{des}$ et la vitesse de lacet prédite r du véhicule, soit réduit,
   l'écart L étant déterminé comme suit :

   $$L = \int_0^T \left( k(r - r_{des})^2 + k_c C_j C_j^T \right) dt,$$

   T étant un domaine temporel de prédiction, $k$ et $k_c$ étant des coefficients constants, et $C_j$ étant un amortissement d'amortisseur d'une suspension d'arbre avant ou un amortissement d'amortisseur d'une suspension d'arbre arrière.

2. Procédé selon la revendication 1, le paramètre d'état comprenant : une accélération latérale, un angle de dérapage latéral centroïde, un angle de virage de roues avant correspondant à un angle de volant de direction, une vitesse longitudinale de véhicule, un angle de roulis de masse suspendue et une vitesse d'angle de roulis de masse suspendue.

3. Procédé selon la revendication 1 ou 2, le procédé comprenant en outre l'étape consistant à : déterminer la vitesse de lacet souhaitée sur la base de la vitesse longitudinale de véhicule et de l'angle de volant de direction du véhicule.

4. Véhicule, comprenant une suspension, qui comprend un amortisseur, et comprenant un appareil de commande de suspension,

   l'appareil de commande de suspension (2000) étant destiné à la suspension,
   l'appareil de commande de suspension (2000) comprenant un amortisseur et étant appliqué à un véhicule,
   l'appareil (2000) comprenant un module de traitement (2010) et un module de réglage (2020),
   le module de traitement (2010) étant configuré pour déterminer que le véhicule effectue un virage, et
   le module de réglage (2020) étant configuré pour régler un paramètre de déformation de la suspension, en réglant un amortissement de l'amortisseur, en réponse à la détermination du virage, pour régler une direction de déplacement du véhicule,
   **caractérisé en ce que** :

   le module de traitement (2010) est en outre configuré pour déterminer une relation d'association entre une vitesse de lacet prédite r du véhicule et le paramètre de déformation de la suspension, sur la base d'un paramètre d'état du véhicule,
   le module de réglage (2020) étant configuré pour régler le paramètre de déformation de la suspension de telle sorte qu'un écart L, modélisé sur la base d'une différence entre une vitesse de lacet souhaitée $r_{des}$ et la vitesse de lacet prédite r du véhicule, soit réduit,
   l'écart L étant déterminé comme suit :

   $$L = \int_0^T \left( k(r - r_{des})^2 + k_c C_j C_j^T \right) dt,$$

14

T étant un domaine temporel de prédiction, $k$ et $k_c$ étant des coefficients constants, et $C_j$ étant un amortissement d'amortisseur d'une suspension d'arbre avant ou un amortissement d'amortisseur d'une suspension d'arbre arrière.

5. Véhicule selon la revendication 4, le paramètre d'état comprenant : une accélération latérale, un angle de dérapage latéral centroïde, un angle de virage de roues avant correspondant à un angle de volant de direction, une vitesse longitudinale de véhicule, un angle de roulis de masse suspendue et une vitesse d'angle de roulis de masse suspendue.

6. Véhicule selon la revendication 4 ou 5, le module de traitement (2010) étant en outre configuré pour déterminer la vitesse de lacet souhaitée sur la base de la vitesse longitudinale de véhicule et de l'angle de volant de direction du véhicule.

7. Support de stockage de programme informatique, le support de stockage de programme informatique comprenant des instructions de programme exécutables pour l'appareil de commande de suspension de la suspension du véhicule selon la revendication 4, les instructions de programme étant configurées pour amener l'appareil de commande de suspension commandant la suspension, comprenant l'amortisseur et appliquée au véhicule, à réaliser le procédé selon l'une quelconque des revendications 1 à 3.

8. Puce, la puce comprenant au moins un processeur et des instructions de programme exécutables configurées pour amener l'au moins un processeur commandant la suspension du véhicule selon la revendication 4, comprenant l'amortisseur et appliquée au véhicule, à réaliser le procédé selon l'une quelconque des revendications 1 à 3.

FIG. 1

FIG. 2

S310

Determine that a vehicle performs steering

S320

Adjust a deformation parameter of a suspension in response to determining of the steering, to adjust a traveling direction of the vehicle

FIG. 3

Lateral force

Load force

FIG. 4

Vertical direction

Lateral direction

Longitudinal direction

FIG. 5

FIG. 6

FIG. 7

FIG. 8

FIG. 9

3000

Memory — 3010

Processor — 3020

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102018203182
- US 2017197485 A
- US 2002128760 A
- US 2018208012 A
- FR 2891772
- US 2005236782 A